(19) Europäisches Patentamt
European Patent Office
Office européen des brevets

(11) **EP 0 642 102 B1**

(12) **EUROPEAN PATENT SPECIFICATION**

(45) Date of publication and mention
of the grant of the patent:
**03.03.1999 Bulletin 1999/09**

(51) Int Cl.[6]: **G06T 15/10**

(21) Application number: **94111585.9**

(22) Date of filing: **25.07.1994**

(54) **Apparatus and method for image processing**

Gerät und Verfahren zur Bildverarbeitung

Appareil et méthode de traitement d'image

(84) Designated Contracting States:
**DE FR GB**

(30) Priority: **31.08.1993 JP 216344/93**

(43) Date of publication of application:
**08.03.1995 Bulletin 1995/10**

(73) Proprietor: **KABUSHIKI KAISHA TOSHIBA**
**Kawasaki-shi, Kanagawa-ken 210-8572 (JP)**

(72) Inventor: **Chimoto, Hiroyuki,**
**c/o Int. Property Division**
**Minato-ku, Tokyo 105 (JP)**

(74) Representative: **Henkel, Feiler, Hänzel**
**Möhlstrasse 37**
**81675 München (DE)**

(56) References cited:
**EP-A- 0 286 416**

## Description

The present invention relates to an image processing method and an image processing apparatus for three-dimensional (3D) computer graphic processing.

Recently, game machines, etc. using computer graphics (CG) have been developed. Most of such game machines comprise two-dimensional CG systems. The reason for this is that in the case of 3D-CG, it is necessary to subject model information (a base model) expressed by a model coordinate system to coordinate transformation to convert the model information to a world coordinate system (i.e. the state in which the entire peripheral environment is expressed) and then to convert the world coordinate system to a visual-point coordinate system (i.e. the state of a drawn picture with a back-and-forth relationship from a visual point). These processes require a great number of AND/ OR arithmetic operations. Moreover, when the visual-point system is converted to a display coordinate system, perspective transformation is necessary in order to obtain a stereoscopic picture and the perspective transformation requires division. In a game in which real-time properties are required, a very-high-speed arithmetic operation apparatus is needed to perform these processes. This type of game machine is, therefore, expensive. Under the circumstances, 3D-CG game machines are used at limited places such as game arcades, etc.

As has been described above, in a conventional real-time 3D computer graphics, a great number of arithmetic operations (mainly division) are performed for each polygon, in particular, in a perspective transformation process, and an arithmetic operation load increases greatly, see e.g. EP 0 286 416 A for reference. If an expensive arithmetic operation apparatus is not used, the processing speed decreases and high-speed picture drawing cannot be achieved. Furthermore, the manufacturing cost increases.

The object of the present invention is to provide an image processing method and apparatus which is effectively applicable to household game machines, etc., wherein a real-time 3D-CG with not so high performance of high-speed arithmetic operations.

According to this invention, there is provided an image processing apparatus comprising: a model information storage unit for storing model information of a model composed of polygons and storing a world map; position-determining/clipping means for determining a position of the model by using the world map, and determining a display object model by a clipping process; display coordinate transformation means for transforming a model coordinate system of the display object model to a display coordinate system; picture-drawing means for polygon-drawing the display object model as texture data (or sprite data) on the basis of information of the converted display coordinate system obtained by the display coordinate transformation means, and storing the obtained model temporarily; means for setting a virtual canvas corresponding to the display object model, subjecting the virtual canvas to perspective transformation by using coordinates of apices of the virtual canvas, and forming a perspective-transformed imaginary canvas; and display control means for storing, in a matching display memory, texture data (or sprite data) of the display object model formed by the picture-drawing means on the perspective-transformed virtual canvas.

According to this structure, when a display object model is subjected to perspective transformation, there is no need to perform the perspective transformation on a polygon-by-polygon basis, and only the display object model may be matched on a virtual canvas and displayed. The process for perspective transformation may be performed on only apices of the virtual canvas, and the number of arithmetic operations can be remarkably decreased.

This invention can be more fully understood from the following detailed description when taken in conjunction with the accompanying drawings, in which:

FIG. 1 shows an embodiment of the present invention;
FIG. 2 is a flow chart illustrating the operation of the apparatus shown in FIG. 1;
FIG. 3 shows an example of an image-processed result of the apparatus shown in FIG. 1;
FIG. 4 illustrates examples of images obtained during the image processing by the apparatus shown in FIG. 1;
FIG. 5 illustrates an example of a perspective transformation process by the apparatus shown in FIG. 1;
FIG. 6 illustrates an example of a virtual canvas of the apparatus shown in FIG. 1;
FIG. 7 shows another embodiment of the present invention; and
FIG. 8 is a flow chart illustrating the operation of the apparatus shown in FIG. 7.

Embodiments of the present invention will now be described with reference to the accompanying drawings.

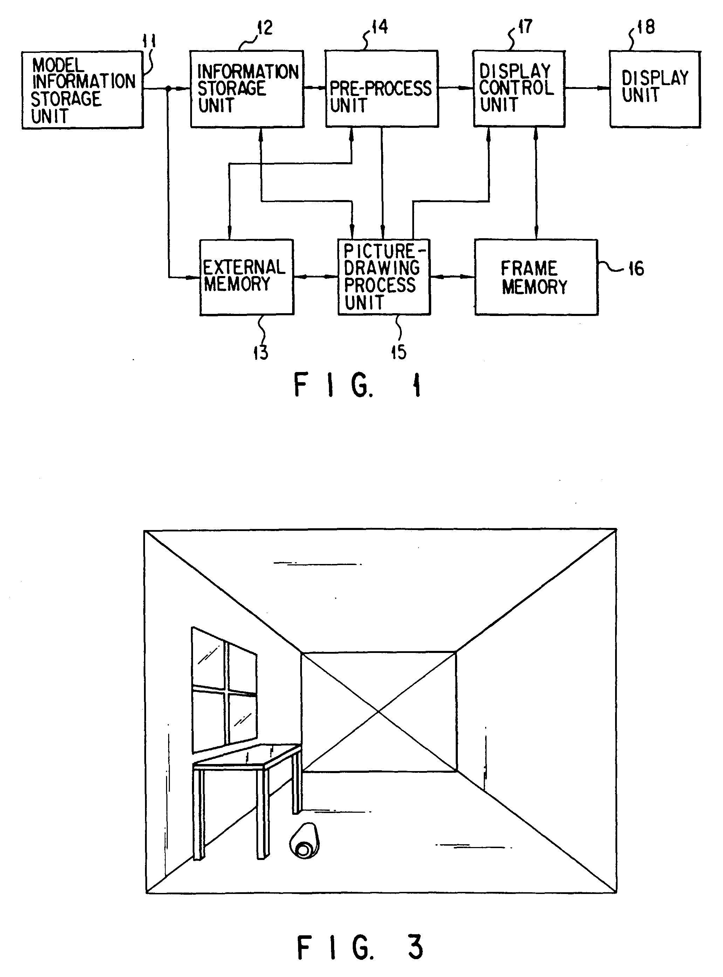

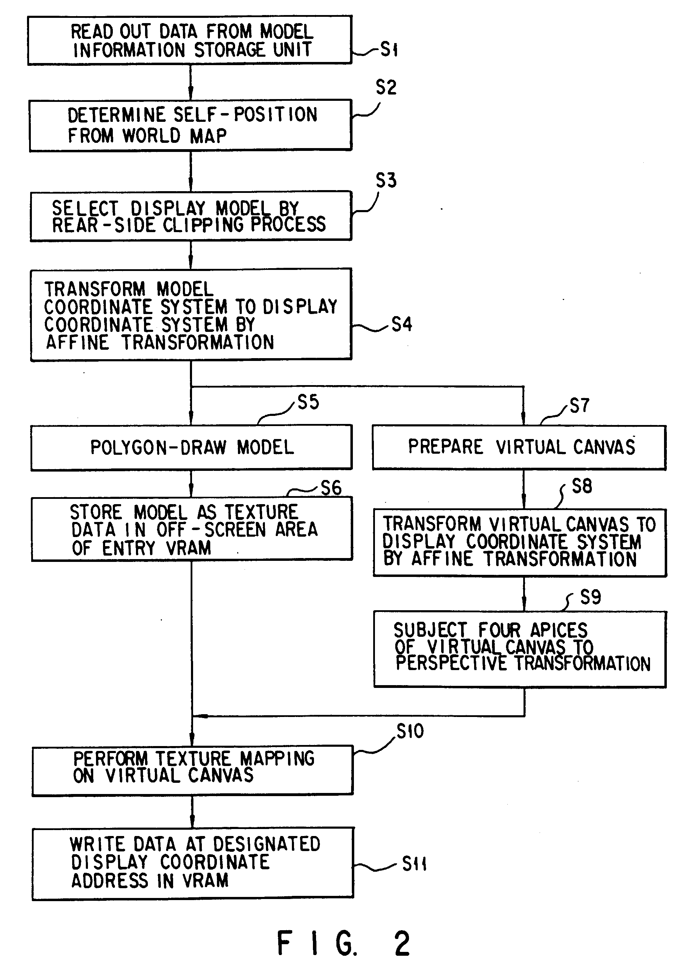

FIG. 1 shows an embodiment of the invention, and FIG. 2 is a flow chart for illustrating a data processing operation in the embodiment shown in FIG. 1. A model information storage unit 1 comprises, as a storage medium, a ROM cassette, a hard-disk, a CD-ROM, or the like. The model information storage unit 11 stores polygon-based model information (coordinate positions of apices of each polygon, luminance, texture, etc.). Further, the storage unit 11 stores world map information containing initial values of an absolute position (X, Y, Z) of each model. These data items are stored directly in an information storage unit 12 of an image processing unit, or they are once stored in an external memory 13 and then stored in the information storage unit 12. The world map information is automatically rewritable so that movement of the model itself can be considered. For example, in the case where the model is an automobile and the world map information represents a town, if the world map information is dynamically rewritten, the automobile can be represented as if it were moving.

Next, using the world map information in the information storage unit 12 or external memory 13, a pre-process unit 14 finds a first position (coordinates from the visual point) of each model. Thereby, the position of each model on the world map coordinate system is determined. If the first coordinates of each model on the world map coordinate system are determined, the back-and-forth relationship among the models, etc. is clarified. In the set visual field, there will be a portion (a model or a portion thereof) located behind or in front a distance value point set from a reference coordinate position. Such a portion is subjected to a clipping process with use of a clipping window and is excluded from an object to be displayed. Further, the pre-process unit 14 converts the model coordinate system (x, y, z) of the selected model to the visual-point coordinate system (X, Y, Z). This conversion is effected by affine transformation represented by the following equation (1):

$$[X\ Y\ Z\ 1]$$

$$= [x\ y\ z\ 1]\ Tr\ Ts \tag{1}$$

where

Tr: rotational movement, and
Ts: scaling

$$
Tr =
\begin{bmatrix}
1 & 0 & 0 & 0 \\
0 & \cos X & -\sin X & 0 \\
0 & \sin X & \cos X & 0 \\
0 & 0 & 0 & 1
\end{bmatrix}
\begin{bmatrix}
\cos Y & 0 & \sin Y & 0 \\
0 & 1 & 0 & 0 \\
-\sin Y & 0 & \cos Y & 0 \\
0 & 0 & 0 & 1
\end{bmatrix}
\begin{bmatrix}
\cos Z & -\sin Z & 0 \\
\sin Z & \cos Z & 0 \\
0 & 1 & 0 \\
0 & 0 & 1
\end{bmatrix}
$$

Rotation about    Rotation about    Rotation about
X-axis              Y-axis             Z-axis

$$
Ts =
\begin{bmatrix}
Sx & 0 & 0 & 0 \\
0 & Sy & 0 & 0 \\
0 & 0 & Sz & 0 \\
0 & 0 & 0 & 1
\end{bmatrix}
$$

Scaling

A transformation result obtained according to equation (1) is transferred to the information storage unit 12 or external memory 13. After the above process is completed in the pre-process unit 14, each polygon information (a coordinate value, luminance, texture coordinates, etc. obtained by equation (1)) is transferred from the information storage unit 12 or external memory 13 to a picture-drawing process unit 15.

Data of the actual model is subjected to processing such as polygon shading, texture mapping, etc. by the picture-drawing process unit 15 by means of DDA (digital differential arithmetic). Specifically, a picture-drawing process is performed for display on a two-dimensional screen. Pixel data obtained in the polygon picture-drawing process is stored in an off-screen area of a frame memory 16 as two-dimensional texture data. The two-dimensional texture data is data to be attached on a virtual canvas as a model. In this state, the model has been still in the two-dimensional picture-drawing state with no depth.

On the other hand, while the picture-drawing process unit 15 is performing the polygon picture-drawing process, the pre-process unit 14 generates virtual canvas positions of the model to be displayed on the basis of the world map information. Onto the virtual canvas, a two-dimensional texture obtained by the polygon picture-drawing-process is attached. This process is as follows.

From the polygon data of the model subjected to the coordinate transformation by the pre-process unit 14, maximum and minimum values in the X- and Y-directions are obtained. A virtual canvas of one magnification is prepared on the basis of the maximum and minimum values by using a polygon as a base. If the polygon is a triangular base, two polygons are combined to constitute the virtual canvas. The coordinate values (x, y, z) of the virtual canvas are transformed to the display coordinate system (X, Y, Z) by using the following equation (2):

$$[X\ Y\ Z\ 1]$$

$$= [x\ y\ z\ 1]\ Td\ Tr\ Ts \tag{2}$$

wherein

Td: translated movement,
Tr: rotational movement, and
Ts: scaling

$$Td = \begin{bmatrix} 1 & 0 & 0 & 0 \\ 0 & 1 & 0 & 0 \\ 0 & 0 & 1 & 0 \\ dx & dy & dz & 1 \end{bmatrix}$$

Translated Movement

$$Tr = \begin{bmatrix} 1 & 0 & 0 & 0 \\ 0 & \cos X & -\sin X & 0 \\ 0 & \sin X & \cos X & 0 \\ 0 & 0 & 0 & 1 \end{bmatrix} \begin{bmatrix} \cos Y & 0 & \sin Y & 0 \\ 0 & 1 & 0 & 0 \\ -\sin Y & 0 & \cos Y & 0 \\ 0 & 0 & 0 & 1 \end{bmatrix} \begin{bmatrix} \cos Z & -\sin Z & 0 & 0 \\ \sin Z & \cos Z & 0 & 0 \\ 0 & 0 & 1 & 0 \\ 0 & 0 & 0 & 1 \end{bmatrix}$$

Rotation about
X-axis

Rotation about
Y-axis

Rotation about
Z-axis

$$Ts = \begin{bmatrix} Sx & 0 & 0 & 0 \\ 0 & Sy & 0 & 0 \\ 0 & 0 & Sz & 0 \\ 0 & 0 & 0 & 1 \end{bmatrix}$$

Scaling

Based on the result (X, Y, Z) obtained by equation (2), the pre-process unit 14 performs perspective transformation. This perspective transformation is performed on, e.g. four apices of the virtual canvas by making use of a distance Z' between the visual point and the model which has been obtained at the time of effecting rear-side clipping. A result of a perspective transformation is transferred to the information storage unit 12 or external memory 13. By this transformation process, the virtual canvas is drawn with a depth.

After the completion of the coordinate transformation of the virtual canvas, perspective transformation and preparation of model texture data, the coordinate values of the virtual canvas are transferred to a display control unit 17. In the display control unit 17, on the basis of the virtual canvas coordinate values, a texture pattern of two-dimensional texture data of the object model is transformed by texture DDA, and texture mapping is performed on the virtual canvas. In addition, the resultant data is written on the virtual canvas coordinates of the on-screen area of the frame memory 16. Thereby the textured model is three-dimensionally expressed on the stereoscopic virtual canvas.

The data written in the frame memory 16 is controlled by the display control unit 17 and displayed on a display unit 18.

FIG. 2 is a flow chart illustrating the image processing of the above apparatus.

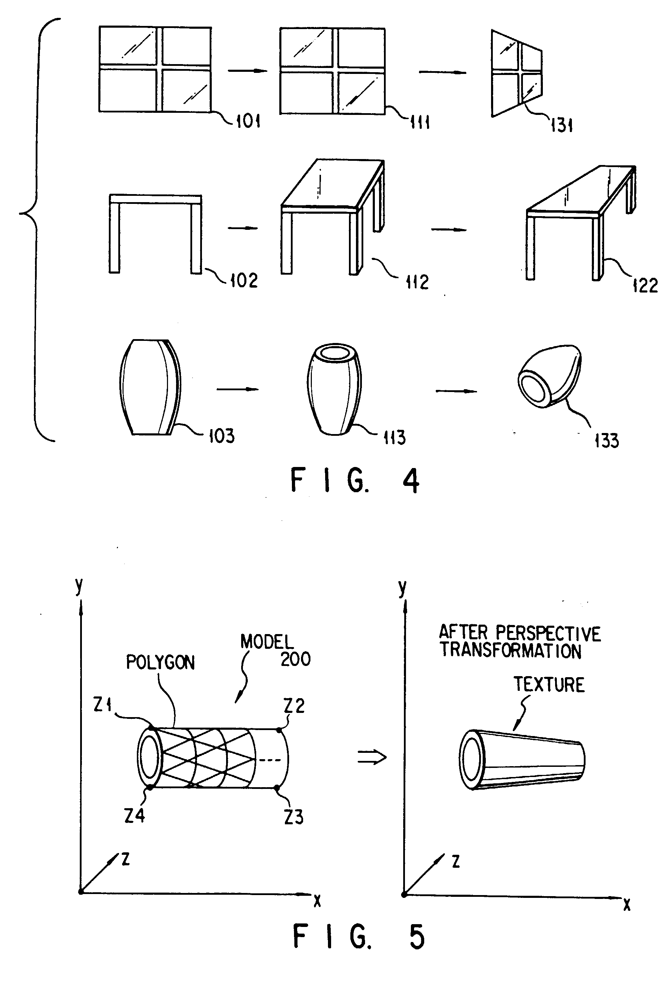

FIGS. 3 and 4 are explanatory views showing images processed by the above apparatus. Suppose that a picture image will be formed, as shown in FIG. 3. In this image, there is a window in a wall of a passage, and a vase is fallen from a desk situated in front of the wall. In order to form this picture, world map information is read out from the model information storage unit 11 (step S1), and a self-visual point is found (step S2). A model to be drawn is determined by rear-side clipping processing (step S3). Associated model information items (a window model 101, a desk model 102, a vase model 103, a wall model 104 for defining a passage in FIG. 4) are read. The model coordinate system or model information is transformed to a display coordinate system) (a visual-point coordinate system) (step S4). This transformation is directed to the display system (in a direction of actually viewing the models). In FIG. 3, the desk model 102 and vase model 103 are rotated with respect to the visual point.

In the picture-drawing process unit 15, a polygon of each model is drawn (step S5). In drawing the polygon, luminance information of the polygon coordinates is converted to pixel data. Furthermore, in this embodiment, the models are textured and coordinate-transformed for display on the two-dimensional screen. The textured models are stored in the off-screen area of the frame memory 16 (step S6).

On the other hand, the virtual canvas is prepared in parallel with the model polygon picture-drawing process (step S7). The virtual canvas is an imaginary plane to which the models are attached, i.e. a flat plane on which the models are situated. This plane is coordinate-transformed onto actual display addresses. In this transformation, processing such as extension, etc. is performed. Next, perspective transformation of the virtual canvas is performed (steps S8 and S9). Thus, the processed texture is mapped on the perspective-transformed virtual canvas, and image data is written at a predetermined location in the frame memory 16 (steps S10 and S11). At the time of this texture mapping, texture DDA is performed. In the example of FIG. 4, the texture of the window model 111 is attached to the virtual canvas and subjected to the perspective transformation. If the window model 111 is mapped by texture DDA, it is expressed as a stereoscopic window mode 131 which imparts a sense of depth perception. On the other hand, the texture of the vase model 113 is attached to the virtual canvas, the virtual canvas is perspective-transformed, and the vase model 113 is mapped by the texture DDA. Thus, the vase model 113 is expressed as a stereoscopic vase model 133 which imparts a sense of depth perception.

The perspective transformation which characterizes the present system will now be described.

In the prior art, all polygons constituting a model are used to perform perspective transformation. However, in the present system, perspective transformation values of the virtual canvas are obtained at least at four apices. Then, the virtual canvas is perspective-transformed, and the object texture model is mapped to meet the transformation result. Thus, there is no need to perspective-transform the model itself in units of a polygon. This perspective transformation process will now be described. As is shown in FIG. 5, when a cylindrical model 200 is present, this model 200 comprises a number of triangular polygons. Specifically, the model comprises coordinate data items of the three apices of each polygon. When the perspective transformation is performed, depth-directional data z is used. In the prior art, by using coordinates (X, Y, Z) of each apex and depth data z, polygon-unit coordinates are obtained by arithmetic operations of $X' = X/z$, $Y' = Y/z$ and $Z' = 1/Z$. However, in this system, a virtual canvas of four apices Z1, Z2, Z3 and Z4 located to surround almost the entire model 200 is prepared, e.g. as shown in FIG. 5. The coordinates (X1, Y1, Z1), (X2, Y2, Z2), (X3, Y3, Z3) and (X4, Y4, Z4) are taken out, and these coordinates are subjected to the perspective transformation. After the perspective transformation, coordinate data on the other positions between front-side coordinate data and rear-side coordinate data is approximated linearly. Subsequently, two-dimensional texture models are matched on the virtual canvas by DDA processing.

Thus, the number of arithmetic operation steps for perspective transformation is remarkably reduced, as compared with the prior art, and the perspective transformation of models can be performed at high speed.

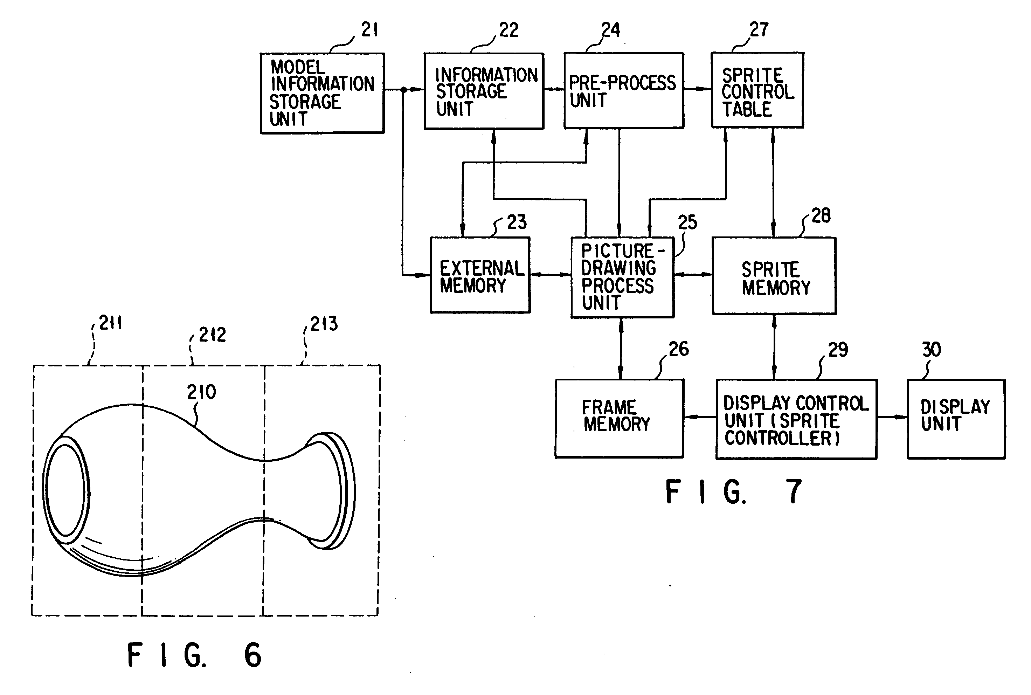

In the above description, it is assumed that one model is contained in an area defined by four apices. The present invention, however, is not limited to this mode, and perspective transformation may be performed with further division of the model. For example, as is shown in FIG. 6, when a deformed vase model 210 is further subjected to perspective transformation in the state in which the vase model 210 is viewed from the opening side, the vase model 210 is divided into blocks 211, 212 and 213 in the axial direction. The coordinates of each apex of these blocks are perspective-transformed, and the perspective-transformed coordinates are obtained.

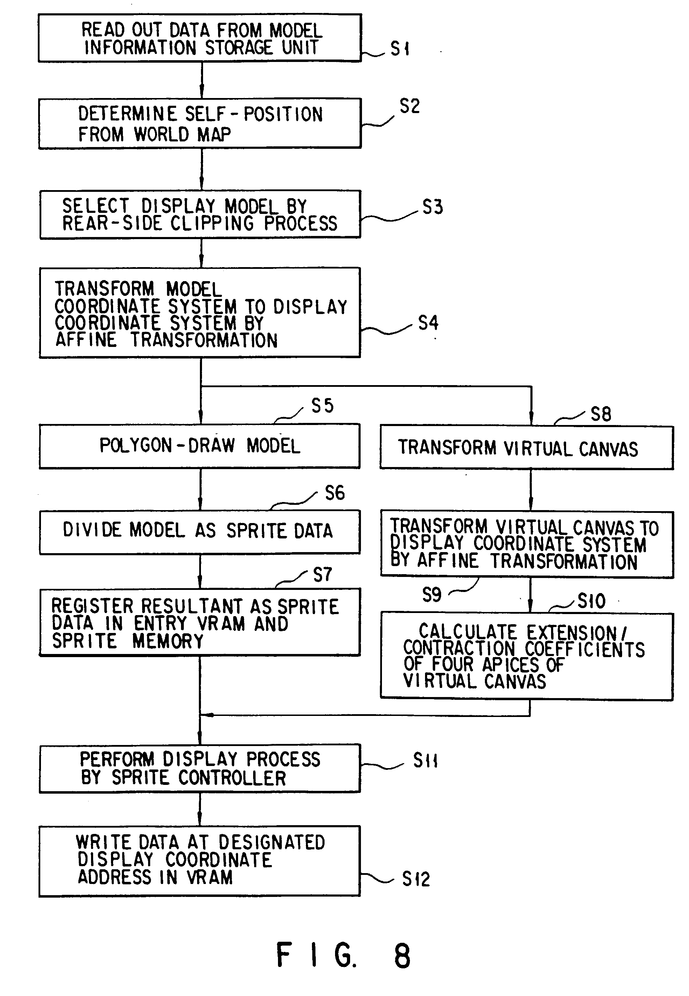

FIG. 7 shows a second embodiment of the present invention. In the first embodiment, a model is treated as a two-dimensional texture. In the second embodiment, the two-dimensional texture is replaced by a sprite used conventionally in a game machine, etc. FIG. 8 is a flow chart illustrating an image processing operation of the above apparatus.

Polygon-based model information items (coordinate positions of apices of each polygon in a model coordinate system, luminance, texture, etc.) are stored in a model information storage unit 21 such as a ROM cassette, a hard-disk, or a CD-ROM. In addition, the storage unit 21 stores a world map containing initial values of an absolute position (X, Y, Z) of each model. These data items are stored directly in an information storage unit 22 of an image processing unit, or they are once stored in an external memory 23 and then stored in the information storage unit 22 (step S1 in FIG. 8). At first, a pre-process unit 24 finds a position (coordinates) of a model by using world map information read out from the information storage unit 22 or exter-nal memory 23 (step S2 in FIG. 8). Thereby, a displayed portion of the model and a position thereof are clarified. Thus, processes of rear-side clipping, front-side clipping, etc. are performed. These processes are performed in the pre-process unit 24. As a result, a model to be actually displayed is determined (step S3 in FIG. 8). The model coordinates (x, y, z) of the selected model are converted to the view coordinates (X, Y, Z) by the following affine transformation equation (3):

$$[X\ Y\ Z\ 1]$$

$$= [x\ y\ z\ 1]\ Tr\ Ts \tag{3}$$

wherein

Tr: rotational movement, and
Ts: scaling

$$Tr=$$

$$\begin{bmatrix} 1 & 0 & 0 & 0 \\ 0 & cosX & -sinX & 0 \\ 0 & sinX & cosX & 0 \\ 0 & 0 & 0 & 1 \end{bmatrix} \begin{bmatrix} COSY & 0 & sinY & 0 \\ 0 & 1 & 0 & 0 \\ -sinY & 0 & cosY & 0 \\ 0 & 0 & 0 & 1 \end{bmatrix} \begin{bmatrix} COSZ & -sinZ & 0 & 0 \\ sinZ & cosZ & 0 & 0 \\ 0 & 0 & 1 & 0 \\ 0 & 0 & 0 & 1 \end{bmatrix}$$

Rotation about X-axis — Rotation about Y-axis — Rotation about Z-axis

$$Ts=$$

$$\begin{bmatrix} Sx & 0 & 0 & 0 \\ 0 & Sy & 0 & 0 \\ 0 & 0 & Sz & 0 \\ 0 & 0 & 0 & 1 \end{bmatrix}$$

scaling

A transformation result obtained by equation (3) is transferred to the information storage unit 22 or exter-nal memory 23. After the above processing in the pre-process unit 24 is completed, each polygon information item (i.e. coordinate values obtained by equation (1), luminance, texture coordinates, etc.) is transferred from the information storage unit 22 or external memory 23 to a picture-drawing process unit 25. In the picture-drawing process unit 25, shading of polygons, texture mapping, etc. are performed by means of DDA (step S5 in FIG. 8). The pixel data obtained as a polygon picture-drawing result is divided to a designated sprite size (step S6 in FIG. 8) and accompanied with a sprite number. The sprite number is registered on a sprite control table 27, and pixel data is stored in an off-screen area of a frame memory 26 or a sprite memory 28 (step S7 in FIG. 8).

On the other hand, while the picture-drawing unit 25 is performing the polygon picture-drawing process, the pre-process unit 24 calculates, from the world map, a position at which a sprite corresponding to a display object model obtained by the polygon picture-drawing process (step S8 in FIG. 8). This process will now be described below.

From the polygon data of the model subjected to the coordinate transformation by the pre-process unit 24, maximum and minimum values in the X- and Y-directions are obtained. Based on the maximum and minimum values, a virtual canvas is prepared on a polygon basis in conformity to the sprite size. One virtual canvas corresponds to one sprite, and therefore the number of virtual canvases is equal to the number of division based on the sprite size. If a polygon is a triangular base, two polygons are combined to constitute a virtual canvas. The coordinate values of the virtual canvas (x, y, z) are coordinate-transformed to the display coordinate system (X, Y, Z) by using the following equation (4):

$$[X \ Y \ Z \ 1]$$

$$= [x \ y \ z \ 1] \ Td \ Tr \ Ts \tag{4}$$

wherein

Td: translated movement,
Tr: rotational movement, and
Ts: scaling

$$Td = \begin{bmatrix} 1 & 0 & 0 & 0 \\ 0 & 1 & 0 & 0 \\ 0 & 0 & 1 & 0 \\ dx & dy & dz & 1 \end{bmatrix}$$

Translated Movement

$$Tr = \begin{bmatrix} 1 & 0 & 0 & 0 \\ 0 & \cos X & -\sin X & 0 \\ 0 & \sin X & \cos X & 0 \\ 0 & 0 & 0 & 1 \end{bmatrix} \begin{bmatrix} \cos Y & 0 & \sin Y & 0 \\ 0 & 1 & 0 & 0 \\ -\sin Y & 0 & \cos Y & 0 \\ 0 & 0 & 0 & 1 \end{bmatrix} \begin{bmatrix} \cos Z & -\sin Z & 0 & 0 \\ \sin Z & \cos Z & 0 & 0 \\ 0 & 0 & 1 & 0 \\ 0 & 0 & 0 & 1 \end{bmatrix}$$

Rotation about
X-axis

Rotation about
Y-axis

Rotation about
Z-axis

$$Ts=\begin{bmatrix} Sx & 0 & 0 & 0 \\ 0 & Sy & 0 & 0 \\ 0 & 0 & Sz & 0 \\ 0 & 0 & 0 & -1 \end{bmatrix}$$

Scaling

Based on a result (X, Y, Z) obtained by equation (4), the pre-process unit 24 makes use of a distance Z' between a reference position and the model, which has been obtained at the time of performing rear-side clipping, and calculates extension/contraction coefficients of the sprite transferred to a sprite controller (display control unit) 29. The extension/contraction coefficients along with the result (X, Y, Z) obtained by equation (4) are transferred to the information storage unit 22 or external memory 23. Subsequently, the pre-process unit 24 performs the perspective transformation process for the four apices of the virtual canvas (step S10 in FIG. 8). The sprite controller (display control unit) 29 for display control stores the coordinate data, etc. in a built-in control data memory. On the basis of the control data and sprite control table 27, the sprite data is read out from the frame memory 26 or sprite memory 18 and is displayed (steps S11 and S12 in FIG. 8).

As has been described above, according to the present embodiment, perspective transformation is not performed on a polygon-by-polygon basis, but the entire model is treated as texture data or sprite data. Thus, the perspective transformation process is performed for the four apices of the imaginary canvas and the processing speed can be increased remarkably. This advantage becomes more conspicuous as the number of polygons constituting the model increases.

The present invention is not limited to the above embodiments. In the first embodiment, for example, the display control unit may be constituted as part of the picture-drawing process unit. In the second embodiment, one virtual canvas may be made to correspond to one model, and an interpolated value may be used as the extension/contraction coefficient for each sprite in the model. Moreover, in the above description, four apices are subjected to perspective transformation. However, at least three apices may be subjected to perspective transformation.

In the above description, the texture data (stored in the off-screen area) is matched on the perspective-transformed virtual canvas and thus displayed. In this case, the virtual canvas may be re-calculated and subjected to perspective transformation under other conditions. Thus, texture data is matched once again and displayed. Only by subjecting the virtual canvas to the perspective transformation, can stereoscopically drawn images as viewed from various visual points be obtained.

As has been described above, according to this system, when a 3D-CG image is generated, a display model is directly coordinate-transformed from the model coordinate system to the display coordinate system by means of affine transformation. The transformation result is registered as rectangular texture data.

On the other hand, with respect to the apices of rectangular texture data, a distance between each apex and a visual point is found and perspective transformation is performed by texture deformation based on 1/Z operations.

According to the present invention, three-dimensional CG can be achieved with an arithmetic operation capacity of not so high speed.

**Claims**

1.  An image processing apparatus comprising:

   a model information storage unit (11) for storing model information of a model composed of polygons and storing a world map;
   position-determining/clipping means (14) for determining a position of said model by using said world map, and determining a display object model by a clipping process;
   display coordinate transformation means (14) for transforming a model coordinate system of said display object model to a display coordinate system; said apparatus characterised by:
   picture-drawing means (15) for polygon-drawing said display object model as texture data or sprite data on the basis of information of the converted display coordinate system obtained by said display coordinate transformation means, and storing the obtained model temporarily;

means (14) for setting a virtual canvas corresponding to said display object model, said virtual canvas being a flat plane on which the model is situated, subjecting the virtual canvas to perspective transformation by using coordinates of apices of the virtual canvas, and forming a perspective-transformed imaginary canvas; and display control means (17) for storing, in a matching display memory, texture data or sprite data of said display object model formed by said picture-drawing means on said perspective-transformed virtual canvas.

2. An image processing method implemented on an image processing apparatus comprising the steps of:

determining a position of a model composed of polygons by using model information of said model and a world map stored in an information storage unit, and determining a display object model by a clipping process (steps S1 to S3);

transforming a model coordinate system of said display object model to a display coordinate system (step S4); said method characterised by:

polygon-drawing data of said display object model as texture data or sprite data on the basis of coordinate information of the converted display coordinate system obtained by said coordinate transforming step, and storing the obtained data temporarily in an off-screen area of a display memory (steps S5 and S6);

setting a virtual canvas corresponding to said display object model, said virtual canvas being a flat plane on which the model is situated, subjecting the virtual canvas to perspective transformation by using coordinates of apices of the virtual canvas, and forming a perspective-transformed imaginary canvas; and

storing, in a matching display memory, texture data or sprite data of said display object model in said off-screen area on said perspective-transformed virtual canvas (steps S10 and S11).

3. The image processing apparatus according to claim 1, characterized in that depth information (Z) obtained by said position-determining means for determining the display position of the display object model for the world map information is used as a perspective transformation value, 1/Z, of each apex for perspective transformation of the virtual canvas.

4. The image processing apparatus according to claim 1, characterized in that an arithmetic operation process for matching a texture of said display object model on said perspective-transformed virtual canvas is a DDA, Digital Differential Arithmetics, process.

## Patentansprüche

1. Bildverarbeitungsgerät mit:

einer Modellinformation-Speichereinheit (11) zum Speichern einer Modellinformation eines Modells, das aus Polygonen besteht, und Speichern einer Weltkarte bzw. -darstellung;

einer positionsbestimmenden/abschneidenden Einrichtung (14) zum Bestimmen einer Position des Modells durch Verwenden der Weltkarte und Bestimmen eines Anzeigeobjektmodells durch einen Abschneideprozeß;

einer Anzeigekoordinaten-Transformationseinrichtung (14) zum Transformieren eines Modellkoordinatensystems des Anzeigeobjektmodells in ein Anzeigekoordinatensystem; wobei das Gerät gekennzeichnet ist durch:

eine Bildzeicheneinrichtung (15) zum Polygonzeichnen des Anzeigeobjektmodells als Struktur- bzw. Texturdaten oder Sprite-Daten auf der Basis einer Information des umgewandelten Anzeigekoordinatensystems, das durch die Anzeigekoordinaten-Transformationseinrichtung erhalten wurde, und vorübergehenden Speichern des erhaltenen Modells;

eine Einrichtung (14) zum Festlegen einer virtuellen Leinwand entsprechend dem Anzeigeobjektmodell, wobei die virtuelle Leinwand eine glatte Ebene ist, auf der das Modell liegt, Unterziehen der virtuellen Leinwand einer perspektivischen Transformation durch Verwenden von Koordinaten von Spitzen der virtuellen Leinwand und Bilden einer perspektivisch transformierten imaginären Leinwand; und

eine Anzeigesteuereinrichtung (17) zum Speichern, in einem anpassenden Anzeigespeicher, von Texturdaten oder Sprite-Daten des Anzeigeobjektmodells, das durch die Bildzeicheneinrichtung auf der perspektivisch transformierten virtuellen Leinwand gebildet wurde.

2. Bildverarbeitungsverfahren, das auf einem Bildverarbeitungsgerät implementiert ist, mit den Schritten:

Bestimmen einer Position eines aus Polygonen bestehenden Modells durch Verwenden einer Modellinformation des Modells und einer Weltkarte bzw. -darstellung, die in einer Informationsspeichereinheit gespeichert sind, und Bestimmen eines Anzeigeobjektmodells durch einen Abschneideprozeß (Schritte S1 bis S3); Transformieren eines Modellkoordinationsystems des Anzeigeobjektmodells in ein Anzeigekoordinatensystem (Schritt S4) ; wobei das Verfahren gekennzeichnet ist durch:

Polygonzeichnen von Daten des Anzeigeobjektmodells als Texturdaten oder Sprite-Daten auf der Basis einer Koordinateninformation des umgewandelten Anzeigekoordinatensystems, das durch den Koordinaten transformierenden Schritt erhalten wurde, und vorübergehendes Speichern der erhaltenen Daten in einem verdeckten bzw. Off-Screen-Bereich (engl. off-screen area) eines Anzeigespeichers (Schritte S5 und S6) ;

Festlegen einer virtuellen Leinwand entsprechend dem Anzeigeobjektmodell, wobei die virtuelle Leinwand eine glatte Ebene ist, auf der das Modell liegt, Unterziehen der virtuellen Leinwand einer perspektivischen Transformation durch Verwenden von Koordinaten von Spitzen der virtuellen Leinwand und Bilden einer perspektivisch transformierten imaginären Leinwand; und

Speichern, in einem anpassenden Anzeigespeicher, von Texturdaten oder Sprite-Daten des Anzeigeobjektmodells in dem Off-Screen-Bereich auf der perspektivisch transformierten virtuellen Leinwand (Schritte S10 und S11).

3. Bildverarbeitungsgerät nach Anspruch 1, dadurch gekennzeichnet, daß eine Tiefeninformation (Z), die durch die positionsbestimmende Einrichtung zum Bestimmen der Anzeigeposition des Anzeigeobjektmodells für die Weltkarteninformation erhalten wurde, als ein Wert 1/Z für eine perspektivische Transformation jeder Spitze für eine perspektivische Transformation der virtuellen Leinwand verwendet wird.

4. Bildverarbeitungsgerät nach Anspruch 1, dadurch gekennzeichnet, daß ein arithmetischer Operationsprozeß zum Anpassen einer Struktur bzw. Textur des Anzeigeobjektmodells auf der perspektivisch transformierten virtuellen Leinwand ein DDA-Prozeß (digitaler differentieller Arithmetik-Prozeß) ist.

**Revendications**

1. Appareil de traitement d'image comprenant :

une unité de stockage d'information de modèle (11) pour stocker une information de modèle d'un modèle constitué par des polygones et pour stocker une carte du monde réel ;
un moyen de détermination/écrêtage de position (14) pour déterminer une position dudit modèle en utilisant ladite carte du monde réel et pour déterminer un modèle d'objet d'affichage au moyen d'un processus d'écrêtage ;
un moyen de transformation de coordonnées d'affichage (14) pour transformer un système de coordonnées de modèle dudit modèle d'objet d'affichage selon un système de coordonnées d'affichage,

ledit appareil étant caractérisé par :

un moyen de tracé d'image (15) pour tracer sous forme de polygones ledit modèle d'objet d'affichage en tant que données de texture ou en tant que données de symbole graphique sur la base d'une information du système de coordonnées d'affichage converti obtenu à l'aide dudit moyen de transformation de coordonnées d'affichage et pour stocker le modèle obtenu temporairement ;
un moyen (14) pour établir un canevas virtuel correspondant audit modèle d'objet d'affichage, ledit canevas virtuel étant un plan plat sur lequel le modèle est situé, pour soumettre le canevas virtuel à une transformation de perspective en utilisant des coordonnées de sommets du canevas virtuel et pour former un canevas imaginaire transformé en perspective ; et
un moyen de commande d'affichage (17) pour stocker, dans une mémoire d'affichage d'adaptation, des données de texture ou des données de symbole graphique dudit modèle d'objet d'affichage formées par ledit moyen de tracé d'image sur ledit canevas virtuel transformé en perspective.

2. Procédé de traitement d'image mis en oeuvre sur un appareil de traitement d'image, comprenant les étapes de :

détermination d'une position d'un modèle constitué par des polygones en utilisant une information de modèle dudit modèle et une carte du monde réel stockées dans une unité de stockage d'information ; et détermination d'un modèle d'objet d'affichage au moyen d'un processus d'écrêtage (étapes S1 à S3) ;
transformation d'un système de coordonnées de modèle dudit modèle d'objet d'affichage selon un système de coordonnées d'affichage (étape S4),

ledit procédé étant caractérisé par :

le tracé sous forme de polygones de données dudit modèle d'objet d'affichage en tant que données de texture ou données de symbole graphique sur la base d'une information de coordonnées du système de coordonnées d'affichage converti obtenu au moyen de ladite étape de transformation de coordonnées et le stockage des données obtenues temporairement dans une zone hors écran d'une mémoire d'affichage (étapes S5 et S6) ; l'établissement d'un canevas virtuel correspondant audit modèle d'objet d'affichage, ledit canevas virtuel étant un plan plat sur lequel le modèle est situé, la soumission du canevas virtuel à une transformation de perspective en utilisant des coordonnées de sommets du canevas virtuel et la formation d'un canevas imaginaire transformé en perspective ; et

le stockage, dans une mémoire d'affichage d'adaptation, de données de texture ou de données de symbole graphique dudit modèle d'objet d'affichage dans ladite zone hors écran sur ledit canevas virtuel transformé en perspective (étapes S10 et S11).

3. Appareil de traitement d'image selon la revendication 1, caractérisé en ce qu'une information de profondeur (Z) obtenue à l'aide dudit moyen de détermination de position permettant de déterminer la position d'affichage du modèle d'objet d'affichage pour l'information de carte du monde réel est utilisée en tant que valeur de transformation de perspective 1/Z de chaque sommet pour une transformation de perspective du canevas virtuel.

4. Appareil de traitement d'image selon la revendication 1, caractérisé en ce qu'un processus d'opération arithmétique pour adapter une texture dudit modèle d'objet d'affichage sur ledit canevas virtuel transformé en perspective est un processus DDA, soit un processus arithmétique numérique différentiel.

F I G. 1

F I G. 3

READ OUT DATA FROM MODEL
INFORMATION STORAGE UNIT — S1

DETERMINE SELF-POSITION
FROM WORLD MAP — S2

SELECT DISPLAY MODEL BY
REAR-SIDE CLIPPING PROCESS — S3

TRANSFORM MODEL
COORDINATE SYSTEM TO DISPLAY
COORDINATE SYSTEM BY
AFFINE TRANSFORMATION — S4

POLYGON-DRAW MODEL — S5

STORE MODEL AS TEXTURE
DATA IN OFF-SCREEN AREA
OF ENTRY VRAM — S6

PREPARE VIRTUAL CANVAS — S7

TRANSFORM VIRTUAL CANVAS TO
DISPLAY COORDINATE SYSTEM
BY AFFINE TRANSFORMATION — S8

SUBJECT FOUR APICES
OF VIRTUAL CANVAS TO
PERSPECTIVE TRANSFORMATION — S9

PERFORM TEXTURE MAPPING
ON VIRTUAL CANVAS — S10

WRITE DATA AT DESIGNATED
DISPLAY COORDINATE
ADDRESS IN VRAM — S11

# F I G.  2

F I G. 4

F I G. 5

EP 0 642 102 B1

**FIG. 7**

- 21 MODEL INFORMATION STORAGE UNIT
- 22 INFORMATION STORAGE UNIT
- 24 PRE-PROCESS UNIT
- 27 SPRITE CONTROL TABLE
- 23 EXTERNAL MEMORY
- 25 PICTURE-DRAWING PROCESS UNIT
- 28 SPRITE MEMORY
- 26 FRAME MEMORY
- 29 DISPLAY CONTROL UNIT (SPRITE CONTROLLER)
- 30 DISPLAY UNIT

211, 212, 213, 210

**FIG. 6**

```
┌─────────────────────────────────┐
│ READ OUT DATA FROM MODEL        │ ─── S1
│ INFORMATION STORAGE UNIT        │
└─────────────────────────────────┘
              │
┌─────────────────────────────────┐
│ DETERMINE SELF-POSITION         │ ─── S2
│ FROM WORLD MAP                  │
└─────────────────────────────────┘
              │
┌─────────────────────────────────┐
│ SELECT DISPLAY MODEL BY         │ ─── S3
│ REAR-SIDE CLIPPING PROCESS      │
└─────────────────────────────────┘
              │
┌─────────────────────────────────┐
│ TRANSFORM MODEL                 │
│ COORDINATE SYSTEM TO DISPLAY    │ ─── S4
│ COORDINATE SYSTEM BY            │
│ AFFINE TRANSFORMATION           │
└─────────────────────────────────┘
              │
      ┌───────┴────────────────────────────┐
      │                                     │
   S5 │                                  S8 │
┌──────────────────────┐      ┌──────────────────────────┐
│ POLYGON-DRAW MODEL   │      │ TRANSFORM VIRTUAL CANVAS │
└──────────────────────┘      └──────────────────────────┘
      │                                     │
   S6 │                                     │
┌──────────────────────┐      ┌──────────────────────────┐
│ DIVIDE MODEL AS      │      │ TRANSFORM VIRTUAL CANVAS TO │
│ SPRITE DATA          │      │ DISPLAY COORDINATE SYSTEM │
└──────────────────────┘      │ BY AFFINE TRANSFORMATION │
      │                       └──────────────────────────┘
   S7 │                          S9 │        S10
┌──────────────────────┐      ┌──────────────────────────┐
│ REGISTER RESULTANT   │      │ CALCULATE EXTENSION/     │
│ AS SPRITE DATA IN    │      │ CONTRACTION COEFFICIENTS │
│ ENTRY VRAM AND       │      │ OF FOUR APICES OF        │
│ SPRITE MEMORY        │      │ VIRTUAL CANVAS           │
└──────────────────────┘      └──────────────────────────┘
      │                                     │
      └───────────┬─────────────────────────┘
                  │
┌──────────────────────────────┐
│ PERFORM DISPLAY PROCESS      │ ─── S11
│ BY SPRITE CONTROLLER         │
└──────────────────────────────┘
                  │
┌──────────────────────────────┐
│ WRITE DATA AT DESIGNATED     │
│ DISPLAY COORDINATE           │ ─── S12
│ ADDRESS IN VRAM              │
└──────────────────────────────┘
```

# F I G.  8